# EUROPEAN PATENT APPLICATION

(11) **EP 2 138 831 A1**
(43) Date of publication of application: **30.12.2009**
(21) Application number: 09163737.1
(22) Date of filing: 25.06.2009
(51) Int. Cl.: G01N 21/39, G01J 3/42

(54) **Crds brewster gas cell**

(30) Priority: 25.06.2008 US 133076 P; 23.06.2009 US 490266
(71) Applicant: Honeywell International Inc., Morristown, NJ 07962 (US)
(72) Inventor: Barrett, Cole E., Bloomington MN 55431 (US); Cox, James A., New Brighton MN 55112 (US); Marta, Teresa M., White Bear Lake MN 55110 (US); Anderson, Carl D., Prior Lake MN 55372 (US); Thorland, Rodney H., Morristown, NJ07962-2245 (US); Platt, William P., Forest Lake MN 55126 (US)
(74) Representative: Buckley, Guy Julian

(57) **Abstract**

A toxic gas sensor or device (11) which is a cavity ring-down spectroscopy device having two or more mirror components (23, 24, 25). Each of the mirror components has two Brewster windows (17, 18) attached to it. The Brewster windows are resistant to toxic gases and together with a respective mirror (13, 14, 15) form a hermetically sealed volume (31) for the mirror surface to protect it from the environment (19) or test gases. The Brewster windows (17, 18) may have a heating mechanism (35) to remove contaminants, condensation, and provide temperature stabilization and other beneficial features.

## Description

This application claims the benefit of U.S. Provisional Patent Application Number 61/133,076, filed June 25, 2008. U.S. Provisional Patent Application Number 61/133,076, filed June 25, 2008, is hereby incorporated by reference.

Related applications include: U.S. Patent Application No. 12/233,396, filed September 18, 2008, and entitled "A Cavity Ring Down System having a Common Input/Output Port"; U.S. Patent Application No. 11/633,872, filed December 4, 2006, and entitled "Laser Sensor Having a Block Ring Activity"; U.S. Patent Application No. 11/770,648, filed June 28, 2007, and entitled "Optical Cavity System Having an Orthogonal Input"; and U.S. Patent Application No. 10/953,174, filed September 28, 2004, and entitled "Tunable Laser Fluid Sensor", now U.S Patent No. 7,145,165.

U.S. Patent Application No. 12/233,396, filed September 18, 2008, and entitled "A Cavity Ring Down System having a Common Input/Output Port", is hereby incorporated by reference. U.S. Patent Application No. 11/633,872, filed December 4, 2006, and entitled "Laser Sensor Having a Block Ring Activity", is hereby incorporated by reference. U.S. Patent Application No. 11/770,648, filed June 28, 2007, and entitled "Optical Cavity System Having an Orthogonal Input", is hereby incorporated by reference. U.S. Patent Application No. 10/953,174, filed September 28, 2004, and entitled "Tunable Laser Fluid Sensor", now U.S Patent No. 7,145,165, is hereby incorporated by reference.

### Background

The invention pertains to gas detection systems and particularly to toxic gas detection systems. More particularly, the invention pertains to cavity ring-down spectroscopy systems.

### Summary

The invention is a dual Brewster window cavity ring-down spectroscopy detector or analyzer having protected optics for detecting and analyzing toxic gases.

### Brief Description of the Drawing

Figures 1a and 1b are diagrams of an illustrative cavity ring-down spectroscopy system incorporating Brewster windows;
Figure 2 is a diagram showing a side view of an example pair of Brewster windows for a leg of a two or more mirror cavity ring-down spectroscopy system;
Figure 3 is a diagram showing an illustrative example of a thin film Brewster window;
Figure 4 is a diagram of a basic test setup for performing a base loss measurement of an optical device;
Figure 5 is a diagram of a setup of a measuring rotational stage for normal incidence alignment;
Figure 6 is a diagram of the setup for measuring loss of a Brewster optical device;
Figure 7 is a table of measured losses for various angles of the Brewster device; and
Figure 8 is a plot of the loss measurements from the table of Figure 7.

### Description

It may be desirable to use a cavity ring down spectroscopy (CRDS) measurements on gases that are hazardous to the high quality optical mirrors. It is also desirable to know a precise path length of the absorption in the gas for doing a more quantitative analysis of cross section.

The present invention may separate the CRDS system into regions, some of which are sealed and either in vacuum or at positive pressure with a non-absorbing gas such as argon. Another portion of the invention may consist of a Brewster cell that can be placed in the light path and have surfaces angled at a Brewster's angle so that there is no reflectance from the surfaces. The material used for the Brewster cell should have no absorption or very low absorption either by being very thin or of a suitable material or a combination of both.

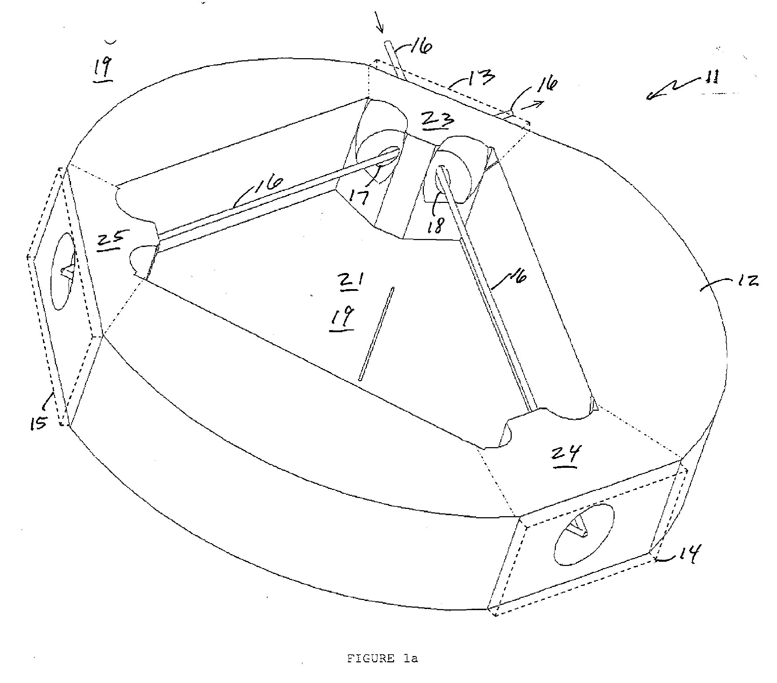

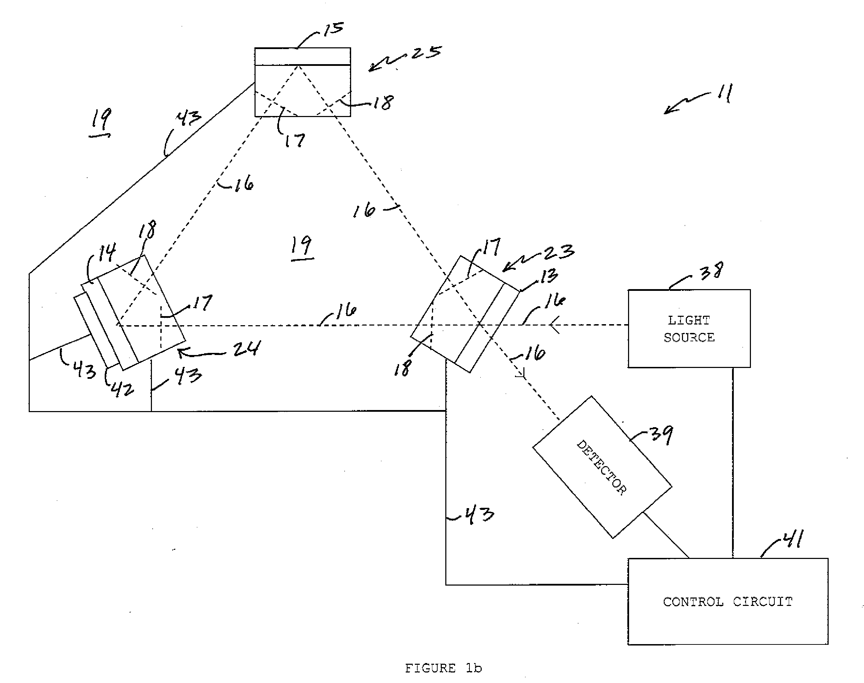

Figures 1a and 1b show an illustrative example 11 of an implementation of the present invention. Item 12 is a structure that may support components of the cavity ring-down spectroscopy device. The structure 12 may have two or more corners with a mirror located at each corner. The mirrors in structure 12 are shown in dashed lines so that other components of the example 11 may be seen. Mirrors 13, 14 and 15 may be attached to structure 12. Light 16 from a source 38 may enter structure 12 through a partially reflective mirror 13. Light 16 may proceed onto mirror 14 to be reflected to mirror 15. Mirror 15 may reflect light to mirror 13. Mirror 13 may reflect light 16 onto mirror 14 which reflects light 16 to mirror 15, and so on, until through losses, light 16 eventually dissipates. In the meanwhile, the magnitude of light 16 may be monitored at mirror 13 since a small amount of light 16 may exit structure 12 through mirror 13 and be sensed by a detector 39. This exit of light 16 may be light leakage or an intentionally designed (i.e., partially reflective) port for output of some light 16.

At each corner of the path for light 16 may be two Brewster windows 17 and 18. One window 17 may receive light to a respective mirror, for instance mirror 13, and the other window 18 may be for light exiting from the mirror. The space or volume between the mirror and the Brewster windows 17 and 18 may be hermetically sealed from the external or ambient environment 19. This space may be a vacuum or filled with an inert gas such as argon, or some gas that would not have absorption at the wave length of light 16. So if structure 12 is in a toxic gas environment 19, mirrors 13, 14 and 15 are protected. Examples of toxic gas include, but are not limited to, NH₃, HF, HCl and H₂S The Brewster windows 17 and 18, which are positioned over mirrors 14 and 15, as over mirror 13, may be made from a material that is not affected by the toxic gas. Examples of window 17, 18 material include, but are not limited to, SiO₂, Si₃N₄, ZrO₂, Al₂O₃ and HfO₂. On the other hand, Brewster windows 17 and 18 may at least be coated with a material impervious to or not affected by the toxic gas. The material of the Brewster windows should not be absorptive at the wavelength of light 16. The backside of mirrors 13, 14 and 15 likewise would not be affected by the toxic gas. On the other hand, the backside of these mirrors may be coated with a protective material or structure.

The mirrors 13, 14 and 15 might not be connected or situated in structure 12, as shown in Figure 1b. The mirrors may be individual structures 23, 24 and 25 separated apart from each other, but maintaining the mirrors 13, 14 and 15, respectively, and Brewster windows 17 and 18, and having hermetically sealed volumes to protect the mirror reflective optics from the ambient environment 19. The structures 23, 24 and 25 could be placed and positioned in different locations in a facility or outside in such a fashion so as to maintain a light path for light 16 so that these structures 23, 24 and 25 can provide the cavity ring-down spectroscopy capabilities of device, sensor or system 11. The structures 23, 24 and 25 may be centimeters or meters apart from one another, whether with or without structure 12. The path length among mirrors 13, 14 and 15 of CRDS system 11 may be tuned with, for example, structure 24 which has a mirror 14 which may be moved by a device 42. Device 42 may be, for instance, a piezoelectric device attached to structure 24 with mirror 14 mounted on device 42. Device 42 may provide a change of relative distance between mirror 14 and structure 24 and cause a path length change of system 11. Device 42 may be controlled by control circuit 41 via line 43. Structures 23 and 25 may have similarly moveable mirrors 13 and 15, respectively, as desired, like that of structure 24.

There may be just two structures, e.g., 23 and 24, or more than three structures in CRDS system 11, along with their respective Brewster windows 17 and 18.

The Brewster windows 17 and 18 may receive light 16. One portion of light 16 may have a P polarization (e.g., vertical), and reject or reflect the portion of light 16 which has an S (i.e., horizontal) polarization. The Brewster angle for windows 17 and 18 may be determined with the following formula, *θ_{B}*=arctan(n₂/n₁), where *θ_{B}* is the Brewster angle, n₁ and n₂ are the refractive indices of the two media, respectively, e.g., environment 19 and the material of windows 17 and 18.

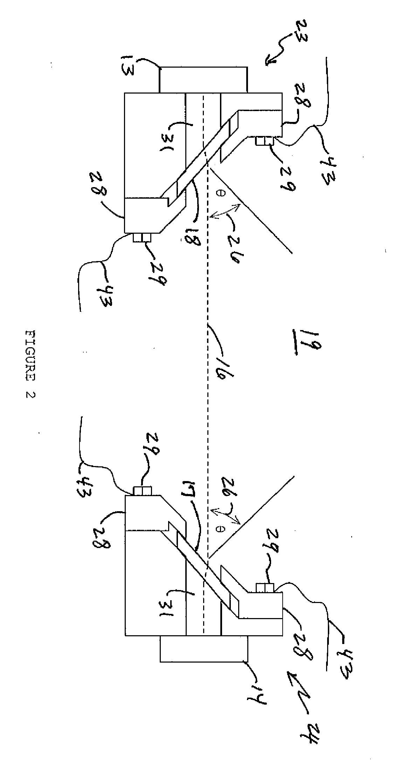

Structures 23, 24 and 25 might be or might not be part of or integrated as a part of the overall structure 12. Figure 2 is a side view of example structures 23 and 24 showing one of the two Brewster windows 17, 18 of each structure. Light 16 may proceed from mirror 13 of structure 23 through Brewster window 18 having a Brewster angle 26. Light 16 may proceed on through environment 19 to Brewster window 17 of structure 24, having a Brewster angle 26. Light 16 may proceed through window 17 onto a surface of mirror 14. Mirror 14 may reflect light 16 on through another Brewster window 18 and onto structure 25 (Figures 1a and 1b) via environment 19. Light 16 may proceed through a Brewster window 17 and to mirror 15 of structure 25. Mirror 15 may in turn reflect light 16 through its other Brewster window 18 to environment 19 and onto and through Brewster window 17 of structure 23. Mirror 13 may again reflect light through its Brewster window 18 onto structure 24 via environment 19, and so on, until the light amplitude dies down through losses and absorption by the environment 19 which may contain a toxic gas to be detected by detector 39 and analyzed by control circuit 41. Control circuit 41 may turn light source 38 on and off as needed to effect a cavity ring-down spectroscopy system.

The environment 19 with the toxic or other gas may be limited to the inside of structure 12 by sealing a cavity volume 21, with plates (not shown) or other effective containment mechanism on the bottom and top of structure 12, from the environment external to volume 21, or volume 21 may be open (without plates or the like) and exposed to environment 19 external to volume 21.

Brewster windows 17 and 18 may be attached to structure 23, 24 or 25, respectively, with clamps 28 and fasteners 29 (e.g., screws). Mirror 13, 14 or 15, respectively, may be attached to its structure with a bonding material or clamping mechanism (not shown). A volume 31 inside of structure 23, 24 or 25, may be hermetically sealed from environment 19 and volume 21. Volume 31 may be a vacuum or filled with a gas (e.g., argon) that would not interfere with the proper operation of device or system 11.

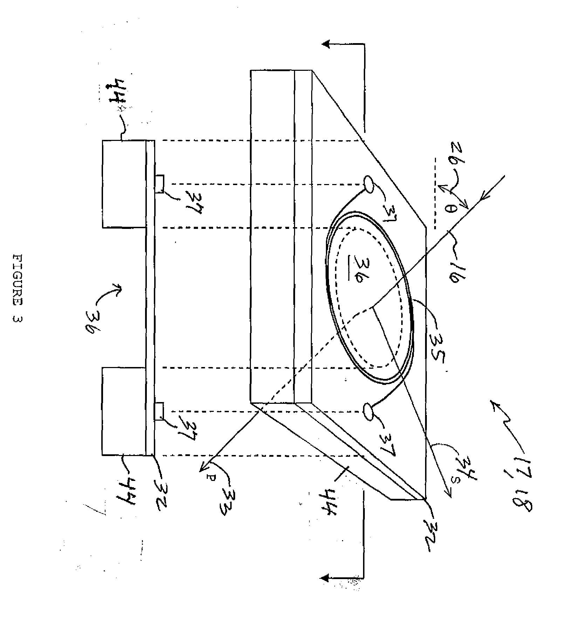

Figure 3 is a diagram of a Brewster window 17 fabricated with a thin film. Window 18 has the same structure as window 17. The diagram of window 17 in Figure 3 shows merely one design of the window, as it could be one solid piece of glass or other material transparent to light 16 and resistant to toxic gases. Or window 17 could be a material transparent to light 16 and not resistant to toxic gases, but be coated with a material that is resistant to toxic gases and also transparent to light 16. Other approaches for window 17 or 18 may be initiated.

Window 17, 18 in Figure 3 may have a substrate 44 with a hole 36 in the middle for transmission of light 16 in either direction. Formed on substrate 44 may be a thin film window 32 attached to the structure in a tensile fashion so as to inhibit buckling of the film under certain environmental changes (e.g., temperature). The thin film 32 may typically have a thickness between 100 nm and a millimeter. It could have another thickness. Substrate 44 may be silicon or some other suitable material. Film window 32 may be made from SiO₂, Si₃N₄, ZrO₂, Al₂O₃ or HfO₂, or some other suitable material. Light 16 may impinge window 32 at a Brewster angle 26. The P polarization component 33 of light 16 may proceed through window 32, whereas the S polarization component of light 16 may be rejected or reflected by window 32.

Situated on film window 32 of Brewster window 17, 18 may be one or more loops of a heating element 35 proximate to hole 36 of substrate 44. Electric power may be applied to element 35 via contact pads 37. Element 35 may be embedded or impregnated in window 32, or be on one side or the other side of window 32. Heater 35 may be used to evaporate contaminants of Brewster window 17, 18, eliminate condensation, and provide other benefits such as temperature stabilization. Heater 35 may be implemented in other designs or configurations of Brewster window 17, 18, for instance, a solid piece of glass, or other light transmissive and toxic gas resistive material. Heater 35 may be connected to control circuit 41 via heater pads 37, connections, and wiring 43 (Figures 1b, 2 and 3). The connection may require a metal contact and an insulating block or some other isolation mechanism at structure 23, 24, 25. The connection could be mounted directly on a block or on an insert in a central hole of the block which would hold the Brewster membranes in a fixture of their own. Figure 2 shows an instance where pieces 28 could convey lines 43, or be a connection from lines 43 to heater pads 37 with pieces 28 electrically isolated from each other.

The information from testing noted herein suggests that, at 633 nm with a Brewster window having two good surfaces, losses of the window may be down at ppm levels. This low amount of loss is very good.

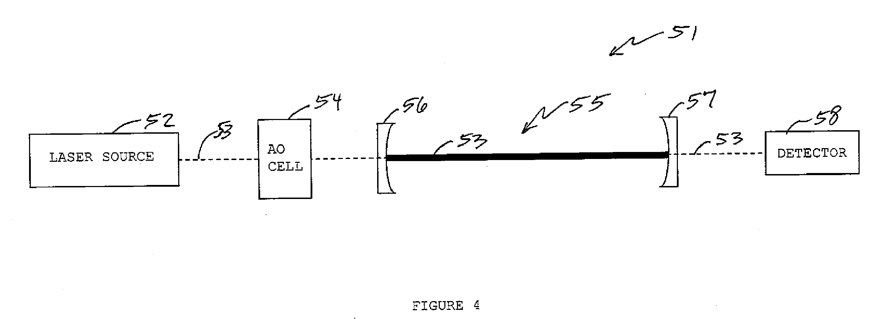

Figure 4 shows a basic test setup 51 for performing a base loss measurement. A laser source 52 may provide light 53 through an acoustic-optic (AO) cell 54 onto a two-mirror cavity ring-down mechanism 55 having mirrors 56 and 57. The amplitude of light 53 in cavity 55 may be detected and determined by detector 58 proximate to mirror 57. After light 53 has been provided to cavity 55, then the AO cell 54 may shut off the supply of light 53 to cavity 55. The light 53 may be reflected back and forth between mirrors 56 and 57 in cavity 55. The light 53 in the cavity 55 will decrease in amplitude due to loss of light from cavity 55. The time of decay may be measured in conjunction with the amplitude measurement determined from the detector 58. These measurements may be used to calculate a base loss for cavity 55.

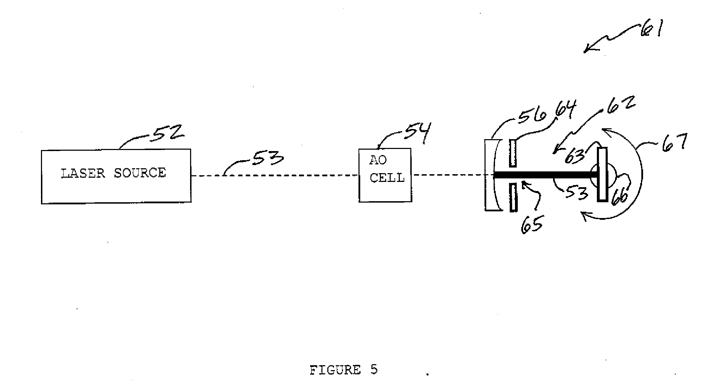

Figure 5 shows a setup 61 for calibrating a rotational stage 66 for normal incidence. A light 53 from light source 52 may emanate through an AO cell 54 and mirror 56 into a cavity 62. Cavity 62 may have a second mirror 63 situated on the rotatable base or stage 66. Near mirror 56 may be a plate or mask 64. In the middle of plate or mask 64 is an aperture or hole 65. Mirror 63 may be rotated, as indicated by line 67, on the base or stage 66 so as to reflect light 53 from the mirror 63 at an end of cavity 62 back to mirror 56 through aperture 65 of plate or mask 64. This amounts to adjusting or rotating the mirror 63 for normal incidence or alignment. The rotation base or stage 66 may be considered zeroed out when the mirror 63 is aligned for reflecting incident light back through aperture 65. Then the rotational or angle measurement indicating device of the rotation stage 66 may be adjusted or set to 90 degrees so as to indicate the normal incident alignment for a mirror or glass that may be placed on stage 66. The measurement indicating device of stage 66 may have a vernier scale capable of providing readings in increments of 0.01 degrees. Thus, the device of stage 66 may be set to read 90.00 degrees at normal incident alignment.

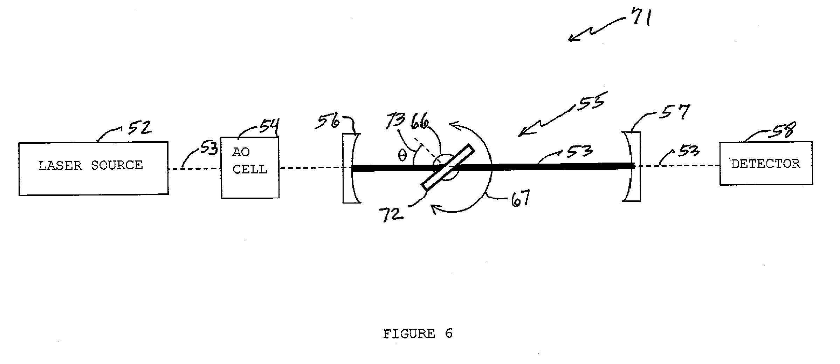

Figure 6 shows a setup 71 for measuring loss with a Brewster glass, membrane or window 72 secured on base or stage 66. A Brewster test may be performed with setup 71 having a rotational stage 66 mounted on a 633 nm lossmeter (i.e., a 633 nm source 52 and detector 58 with cavity 55 tuned to 633 nm). Stage 66 is generally located equidistant between the cavity end mirrors 56 and 57. With the current system layout, the Brewster glass rotational axis is in a plane of the optical system 71. This arrangement allows p-mode polarized light to pass through the glass 72 at a Brewster's angle 73 (θ). A fused silica substrate may be used as the Brewster glass 72 for the test. The substrate is assumed to have a refractive index of 1.457.

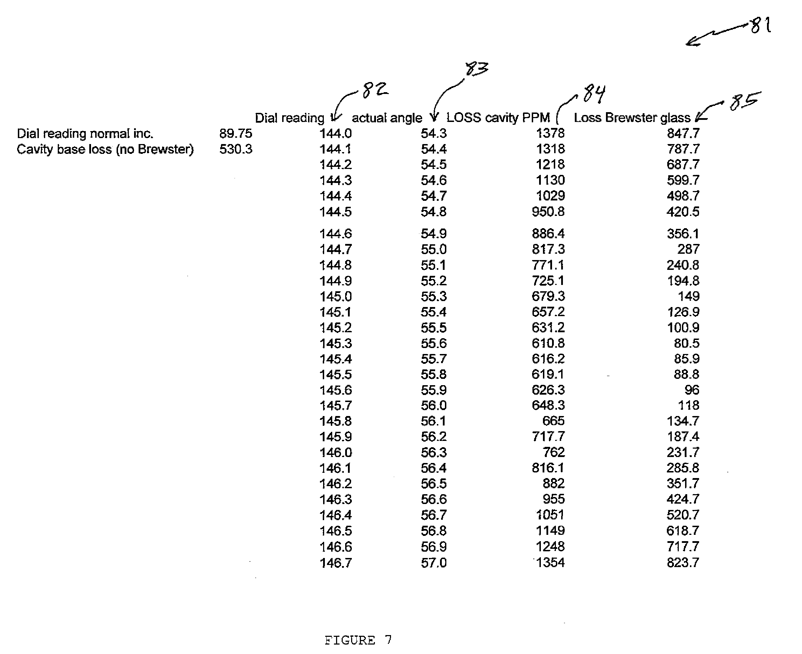

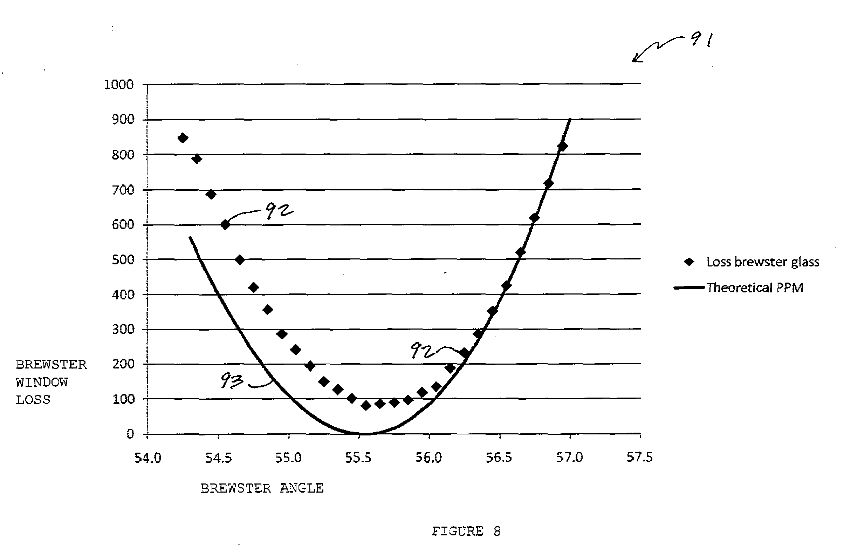

Test data was taken with setup 71. A reading of the rotational stage 66 was made with the rotation set to allow the laser beam 53 to reflect back on itself from test Brewster window 72. The dial read 89.75 degrees even though a 90.00 degree reading was anticipated after an alignment performed with mirror 63 in setup 61 of Figure 5. Readings of 0.01 degree resolution were made on the vernier scale between two mated round bases for the rotatable stage 66 for measuring incident angle of a stage mounted optical device such as a pane 72 of glass or substrate. Then loss measurements of the pane 72 were made at other angles near the Brewster angle 73 as shown in a table 81 of Figure 7. Results of Brewster glass 72 loss versus angle near the Brewster angle 73 were plotted on a graph 91 shown in Figure 8.

The Brewster window 72 that was used for the test had only one super-polished surface. Its backside had a normal polish which could account for the 80 ppm overall increase in loss. There appeared to be an angle shift of approximately 0.15 degrees. This may be due to initially setting laser beam 53 back on itself. The calibration was done visually and somewhat challenging to judge since the separation of mirrors 56 and 57 was close. The Brewster test information suggests that at 633 nm for a window having two good surfaces, losses for Brewster window 72 can be down at ppm levels.

Figure 7 shows table 81 of measured losses for various angles of the Brewster window 72. The dial readings and their conversions to actual angles are shown in columns 82 and 83, respectively. The cavity base loss with no Brewster window 72 was measured with setup 51 in Figure 4 as 530.3 ppm. The sum of cavity 55 base loss and the Brewster window 72 loss in ppm is shown in column 84. The loss attributed to the Brewster glass or window 72 (i.e., total cavity loss minus cavity base loss) is shown in column 85.

Figure 8 shows a graph of loss in ppm versus angle 73 for Brewster glass 72 as indicated by plots 92. Curve 93 shows a theoretical plot of Brewster glass loss versus angle of the glass relative to the incident beam of light.

In the present specification, some of the matter may be of a hypothetical or prophetic nature although stated in another manner or tense.

Although the invention has been described with respect to at least one illustrative example, many variations and modifications will become apparent to those skilled in the art upon reading the present specification. It is therefore the intention that the appended claims be interpreted as broadly as possible in view of the prior art to include all such variations and modifications.

## Claims

1. A cavity ring-down spectroscopy Brewster gas cell having protected optics, for detecting and analyzing toxic gases, comprising:
two or more structures (23, 24, 25) positioned to reflect light (16) around in a closed path; and
wherein each structure comprises:
a mirror (13, 14, 15) having a reflective portion;
a first window (17) situated at the reflective portion; and
a second window (18) situated at the reflective portion; and
wherein:
the first and second windows (17, 18) at the reflective portion form the structure to seal the reflective portion of the mirror from the ambient environment (19) of the structure;
each window (17, 18) is positioned to be at a Brewster angle relative to a light beam (16) going to and from the reflective portion of the window; and
each window (17, 18) is fabricated with a material resistant to toxic gases.

2. The cell of claim 1, wherein:
each window (17, 18) comprises:
a substrate (44) having an opening (36); and
a layer (32) of material situated on the substrate and covering the opening; and
wherein the layer (32) of material is a film adhered to the substrate (44).

3. The cell of claim 2, wherein the film comprises material resistant to NH₃, HF, HCl, H₂S, and other such toxic materials.

4. The cell of claim 2, wherein:
a Brewster angle (26) of one window (17, 18) proximate to one mirror (13, 14, 15) and subject to being impinged by a beam of light (16) and a Brewster angle (26) of another window (18, 17) proximate to another mirror (13, 14, 15) and being impinged by the same beam of light are equal to each other;
the windows (17, 18) are not parallel to each other;
the windows (17, 18) are positioned to pass one polarization of the beam of light (16) and reflect another polarization of the beam of light;
a Brewster angle (26) of each window (17, 18) is indicated by the formula
*θ_{B}*=arctan (n₂/n₁) ;
*θ_{B}* is the Brewster angle;
n₂ is the index of refraction of material of the window (17, 18); and
n₁ is the index of refraction of the medium (19) external to the window where an entry beam of light (16) originates.

5. The cell of claim 2, wherein:
a first structure (23, 24, 25) is for entry of a light beam (16) into the closed path; and
the first structure is for leaking light (16) from the closed path for detection of light beam amplitude.

6. A cavity ring-down spectroscopy Brewster gas detection system, comprising:
a cavity ring-down structure (12) comprising two or more mirror mechanisms (23, 24, 25); and
wherein each mirror mechanism comprises:
a mirror (13, 14, 15) having a reflective surface;
a first Brewster window (17) proximate to the mirror;
a second Brewster window (18) proximate to the mirror; and
a structure for containing the mirror and the first and second Brewster windows (17, 18) and sealing the reflective surface from an ambient environment (19) of the mirror mechanism (23, 24, 25); and
wherein the Brewster windows (17, 18) are input and output ports for a light beam (16) to and from the reflective surface, respectively.

7. The system of claim 6, wherein
the first Brewster window (17, 18) comprises a thin film material (32) for conveying light (16) and resisting toxic gases;
the second Brewster window (18, 17) comprises a thin film material (32) for conveying light (16) and resisting toxic gases;
the first Brewster window further comprises a heater (35) for cleaning the window; and
the second Brewster window further comprises a heater (35) for cleaning the window.

8. The system of claim 7, wherein the thin film material (32) is selected from a group consisting of ZrO₂, Al₂O₃, HfO₂, SiO₂, Si₃N₄, and the like.

9. A cavity ring down spectroscopy detector for detecting gases, including toxic gases, comprising:
two or more light beam reflecting mechanisms (23, 24, 25) situated at different locations and aligned with each other to form a cavity ring down light path; and
wherein each light beam reflecting mechanism (23, 24, 25) comprises:
a mirror (13, 14, 15);
a first Brewster window (17) transmissive to a light beam (16) to be reflected by the mirror;
a second Brewster window (18) transmissive a light beam (16) reflected by the mirror; and
a structure for containing the mirror (13, 14, 15), and the first and second Brewster windows (17, 18), to provide a sealed containment (31) to protect the mirror from the ambient environment (19); and
wherein:
the different locations of the two or more light beam reflecting mechanisms (23, 24, 25) are situated in a space; and
the two or more light beam reflecting mechanisms (23, 24, 25) are located to provide a closed path among the structures for a light beam (16).

10. The detector of claim 9, wherein:
each Brewster window (17, 18) comprises a surface external of the light beam reflecting mechanism (23, 24, 25) which is impervious to many toxic gases; and
the surface external of the light beam reflecting mechanism comprises a heater (35) for cleaning the surface.
